# EUROPÄISCHE PATENTSCHRIFT

(11) **EP 0 512 361 B1**
(45) Veröffentlichungstag und Bekanntmachung des Hinweises auf die Patenterteilung: **11.10.1995**
(21) Anmeldenummer: 92107187.4
(22) Anmeldetag: 28.04.1992
(51) Int. Cl.: H01R 4/66

(54) **Erdungsmutter**
Earth nut
Ecrou de mise à la terre

(30) Priorität: 07.05.1991 DE 9105667 U
(43) Veröffentlichungstag der Anmeldung: 11.11.1992
(73) Patentinhaber: Steinbach & Vollmann GmbH & Co., 42579 Heiligenhaus (DE)
(72) Erfinder: Hucken, Ulrich, W-5628 Heiligenhaus (DE)
(74) Vertreter: Stenger, Watzke & Ring Patentanwälte

(56) Entgegenhaltungen:
- EP-A- 0 025 472
- DE-C- 319 339
- DE-C- 1 090 468

## Beschreibung

Die Erfindung betrifft eine Erdungsmutter, insbesondere zur Befestigung von metallischen Verschlüssen an Schaltschranktüren, mit auf beiden Stirnflächen ausgebildeten, in Festdrehrichtung scharfen Zähnen, die jeweils durch eine Materialverdrängung unter gleichzeitiger Bildung einer vor der Zahnschneide liegenden Vertiefung gebildet sind.

Derartige Erdungsmuttern sind im Stand der Technik bekannt. Beispielsweise ist aus der EP-PS 0 025 472 eine Erdungsbefestigung in Form einer Mutter, Schraube oder Klammer bekannt, die insbesondere zur Befestigung von Verschlüssen für Schaltschranktüren dient, bei denen der durch eine metallische Wand hindurchgeführte Verschluß durch elektrischen Kontakt zwischen der seitlichen Auflagefläche der Erdungsbefestigung und der Wand elektrisch geerdet wird. Diese vorbekannte Erdungsmutter weist mehrere Zähne auf, die eine wesentlich kleinere Breite als die Querschnittsbreite der Auflagefläche der Erdungsmutter haben und die in jeweils anderem Radialabstand von der Mutternachse angeordnet sind. Die Zähne sind jeweils im Bereich der Eckpunkte zwischen zwei benachbarten Schlüsselflächen angeordnet. Es ist ein Nachteil dieser vorbekannten Erdungsmutter, daß die Zähne bei größeren Zahnbreiten Kratzspuren auf dem Türblatt erzeugen, die nicht von der Fläche der Erdungsmutter abgedeckt werden. Durch Feuchtigkeit entsteht an diesen Stellen Korrosion, die dazu führt, daß der auf die Schaltschranktüren aufgetragene Lack abplatzt und Korrosionsschäden entstehen. Ferner ist es bei dieser vorbekannten Erdungsmutter nachteilig, daß die abgekratzten Lackspäne zum Mutternäußeren gelangen können, so daß sie über die Mantelfäche der Erdungsmutter hervorstehen und bei entsprechender Härte zu Verletzungen führen können, wenn die Mutter mit der Hand angezogen oder gelöst wird.

Ausgehend von diesem Stand der Technik liegt der Erfindung die A u f g a b e zugrunde, die gattungsgemäßen Erdungsmuttern derart zu verbessern, daß einerseits ein Verkratzen des Türblattes außerhalb der durch die Mutter abgedeckten Fläche und ein Hervortreten von abgekratzten Lackspänen über die Mantelfläche der Erdungsmutter hinaus verhindert werden und andererseits eine zuverlässige Erdung erzielt wird.

Die erfindungsgemäße L ö s u n g dieser Aufgabenstellung ist dadurch gekennzeichnet, daß die Zähne jeweils im Bereich geringster Breite zwischen den Ecken der Mutter und mit einem Schneidenverlauf ausgebildet sind, der unter einem spitzen Winkel zur radialen Erstreckung der Mutter mit in Festdrehrichtung voreilender äußeren Schneidenecke ausgebildet ist, wobei die Zahnschneiden am radial außenliegenden Ende bis in den Randbereich der Mutter ausgebildet sind und am radial innenliegenden Ende in einem mindestens der Tiefe des Gewindes der Mutter entsprechenden Abstand von dem Innendurchmesser enden.

Durch die Lage der Zähne in den schmalsten Bereichen der Mutter zwischen den Ecken und durch die Schrägstellung des Zahnschneidenverlaufes wird erreicht, daß nicht nur ein Aufkratzen der Lackschicht der Unterlage, insbesondere eines Türblattes außerhalb der durch die Mutter abgedeckten Fläche und das seitliche Hervortreten von abgekratzten Spänen vermieden werden; gleichzeitig bewirkt die geringe Zahl der jeweils zwischen zwei Ecken liegenden Zähne in Verbindung mit der Schrägstellung der Zahnschneiden und damit dem Abtransport der abgekratzten Lackspäne zur Mitte hin eine zuverlässige Erdung, weil die geringe Zähnezahl in Verbindung mit deren geringer radialer Erstreckung nur eine begrenzte Lackmenge abkratzt und diese Lackspäne aus demjenigen Bereich abtransportiert werden, in dem die Mutter flächig an der Unterlage anliegt. Hierfür ist es wichtig, daß die Zahnschneiden zwar am außenliegenden Ende bis in den Randbereich der Mutter ausgebildet sind, am radial innenliegenden Ende jedoch in einem Abstand zum Innendurchmesser enden, der mindestens der Tiefe des Gewindes entspricht. Dies führt zur Schaffung eines Stauraumes für die Lackspäne um den Innendurchmesser herum und verhindert bei der durch Materialverdrängung bewirkten Zahnherstellung außerdem eine Beschädigung des Innengewindes der Mutter.

Gemäß einem weiteren Merkmal der Erfindung ist es möglich, daß die Schneide geradlinig verläuft. Eine Verbesserung der Leitfunktion der Lackspäne wird in vorteilhafter Weise schließlich dadurch erzielt, daß die Schneide bogenförmig verläuft.

Weitere Einzelheiten und Vorteile ergeben sich aus der nachfolgenden Beschreibung der zugehörigen Zeichnungen, in denen eine bevorzugte Ausführungsform einer erfindungsgemäßen Erdungsmutter dargestellt ist. In den Zeichnungen zeigen:
- Fig. 1: eine Draufsicht auf eine Erdungsmutter;
- Fig. 2: eine Seitenansicht der Erdungsmutter gemäß Fig. 1;
- Fig. 3: einen Schnitt durch die Erdungsmutter gemäß der Schnittlinie III-III in Fig. 1 und
- Fig. 4: einen detailliert dargestellten vertikalen Teilschnitt durch einen Zahn gemäß der Schnittlinie IV-IV in Fig. 1.

Die in den Figuren dargestellte Erdungsmutter ist als im Stand der Technik bekannte Mutter 1 mit sechs Schlüsselflächen 2 ausgebildet. Zwischen zwei benachbarten Schlüsselflächen 2 ist jeweils eine Ecke 3 der Mutter 1 ausgebildet. Die Mutter 1 weist ferner zwei gegenüberliegend angeordnete Stirnflächen 4 und ein Gewinde 5 auf.

Auf beiden Stirnflächen 4 sind in Festdrehrichtung scharfe Zähne 6 mit Zahnschneiden 7 ausgebildet. Die Zähne 6 dienen zum Entfernen von isolierenden Schichten, insbesondere Lack- und Oxidschichten, die auf ein nicht dargestelltes Türblatt aufgetragen sind. Diese Lack- und Oxidschichten werden zum Zwecke der Erdung entfernt, so daß die metallische Erdungsmutter in direktem Kontakt mit dem metallischen Türblatt steht und eventuelle Lackschichten nicht als Isolator wirken können.

Die Zähne 6 sind jeweils durch eine Materialverdrängung unter gleichzeitiger Bildung einer vor den jeweiligen Zahnschneiden 7 liegenden Vertiefung 8 aus dem Material der Mutter herausgedrückt. Die Vertiefungen 8 dienen der Aufnahme der von dem Türblatt abgekratzten Lack- oder Oxidschichtpartikel.

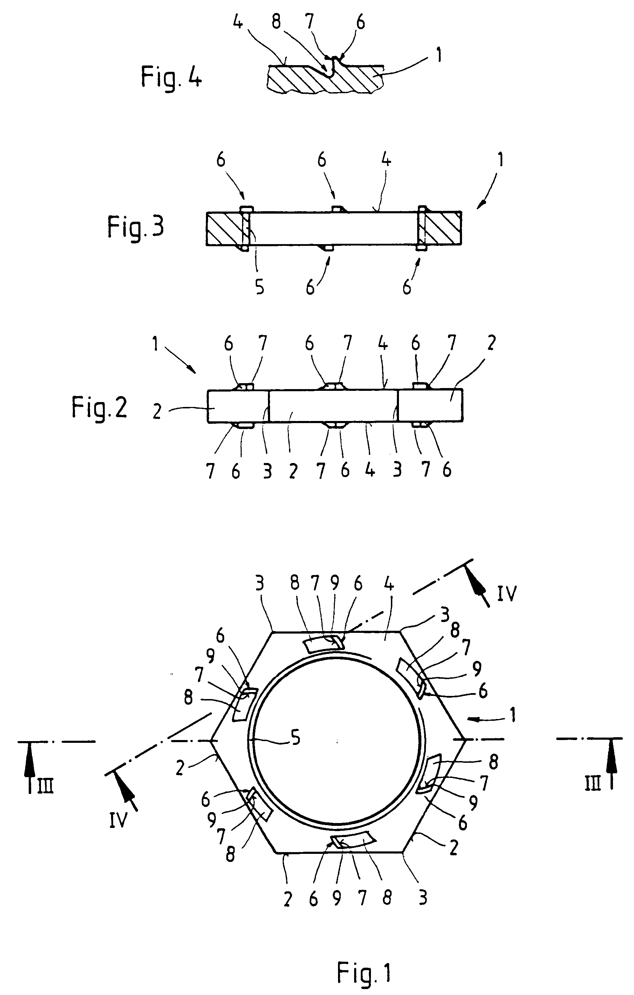

Wie insbesondere in Fig. 1 zu erkennen ist, sind die Zähne 6 jeweils im Bereich geringster Breite zwischen den Ecken 3 der Mutter 1 und mit einem Schneidenverlauf ausgebildet, der unter einem spitzen Winkel zur radialen Ersteckung der Mutter 1 mit in Festdrehrichtung voreilender äußeren Schneidenecke 9 verläuft. Die Zahnschneiden 7 verlaufen vom radial außenliegenden Ende bis in den Randbereich der Mutter 1, wobei die Zahnschneiden 7 in einem mindestens der Tiefe des Gewindes 5 der Mutter 1 entsprechenden Abstand von dem radial innenliegenden Ende der Mutter 1 enden. In dem dargestellten Ausführungsbeispiel der erfindungsgemäßen Erdungsmutter verlaufen die Zahnschneiden 7 im wesentlichen bogenförmig, so daß die abgekratzten Farb- oder Oxidschichtpartikel in Richtung des Gewindes 5 gefördert werden, wo sie in den Vertiefungen 8 aufgenommen werden. Es ist jedoch auch denkbar, daß die Zahnschneiden 7 einen geradlinigen Verlauf haben.

Die Erfindung ist nicht auf das dargestellte Ausführungsbeispiel beschränkt. Andere Ausführungen der Erfindung sind möglich. Beispielsweise können die Zähne 6 auch an einer Schraube angeordnet sein, wobei die Zähne 6 an der dem Gewinde zugewandten Stirnfläche der Schraube ausgebildet sind.

### Bezugszeichenliste

1 Mutter
2 Schlüsselfläche
3 Ecke
4 Stirnfläche
5 Gewinde
6 Zahn
7 Zahnschneide
8 Vertiefung
9 Schneidenecke

## Patentansprüche

1. Erdungsmutter, insbesondere zur Befestigung von metallischen Verschlüssen an Schaltschranktüren, mit auf beiden Stirnflächen (4) ausgebildeten, in Festdrehrichtung scharfen Zähnen (6), die jeweils durch eine Materialverdrängung unter gleichzeitiger Bildung einer vor der Zahnschneide (7) liegenden Vertiefung (8) gebildet sind,
**dadurch gekennzeichnet,**
daß die Zähne (6) jeweils im Bereich geringster Breite zwischen den Ecken (3) der Mutter (1) und mit einem Schneidenverlauf ausgebildet sind, der unter einem spitzen Winkel zur radialen Erstreckung der Mutter (1) mit in Festdrehrichtung voreilender äußeren Schneidenecke (9) ausgebildet ist, wobei die Zahnschneiden (7) am radial außenliegenden Ende bis in den Randbereich der Mutter (1) ausgebildet sind und am radial innenliegenden Ende in einem mindestens der Tiefe des Gewindes (5) der Mutter (1) entsprechenden Abstand von dem Innendurchmesser enden.

2. Erdungsmutter nach Anspruch 1, dadurch gekennzeichnet, daß jede Zahnschneide (7) geradlinig verläuft.

3. Erdungsmutter nach Anspruch 1, dadurch gekennzeichnet, daß jede Zahnschneide (7) bogenförmig verläuft.

## Claims

1. Earthing nut, in particular for fastening metallic closures on switching cabinet doors, having teeth (6) which are designed on both end surfaces (4), are sharp in the tightening direction and are each formed by material displacement with the simultaneous formation of a depression (8) which is located in front of the tooth cutting edge (7), characterized in that the teeth (6) are each constructed in the region of smallest width between the corners (3) of the nut (1) and with a cutting edge profile which is constructed at an acute angle with respect to the radical extent of the nut (1) with an outer cutting edge corner (9) which projects in the tightening direction, the tooth cutting edges (7) being constructed at the radially outer end, extending into the edge region of the nut (1), and ending, at the radially inner end, at a distance from the internal diameter, which distance corresponds at least to the depth of the thread (5) of the nut (1).

2. Earthing nut according to Claim 1, characterized in that each tooth cutting edge (7) runs in a straight line.

3. Earthing nut according to Claim 1, characterized in that each tooth cutting edge (7) runs in the form of an arc.

## Revendications

1. Ecrou de mise à la terre, notamment pour la fixation de fermetures métalliques sur des portes d'armoires de commande, présentant des dents aiguës dans le sens de la rotation de blocage, formées sur les deux faces (4) et qui sont chacune constituées par un refoulement du matériau en formant en même temps un évidement (8) situé devant l'arête vive (7) de la dent (6),
caractérisé en ce que,
les dents (6) sont chacune formées dans la zone de largeur minimale entre les coins (3) de l'écrou (1) et avec un profil d'arête qui est constitué en formant un angle aigu par rapport à l'étendue radiale de l'écrou (1), avec des pointes d'arête extérieures (9) avancées dans le sens de la rotation de blocage, les arêtes vives (7) des dents étant formées, au niveau de l'extrémité radialement extérieure, jusque dans la zone de bord de l'écrou (1) et se terminant, au niveau de l'extrémité radialement intérieure, à une distance du diamètre intérieur, correspondant au moins à la profondeur du filet (5) de l'écrou (1).

2. Ecrou de mise à la terre selon la revendication 1, caractérisé en ce que chaque arête vive de dent (7) s'étend en ligne droite.

3. Ecrou de mise à la terre selon la revendication 1, caractérisé en ce que chaque arête vive de dent (7) s'étend en forme d'arc.
